# EUROPEAN PATENT SPECIFICATION

(11) **EP 2 808 777 B1**
(45) Date of publication and mention of the grant of the patent: **01.05.2019**
(21) Application number: 14170483.3
(22) Date of filing: 29.05.2014
(51) Int. Cl.: G06F 3/0488, G06F 3/0481, G06F 3/0483, G06F 17/22

(54) **Method and apparatus for gesture-based data processing**
Verfahren und Vorrichtung für gestenbasierte Datenverarbeitung
Procédé et appareil de traitement de données à base de gestes

(30) Priority: 31.05.2013 KR 20130062699
(43) Date of publication of application: 03.12.2014
(73) Proprietor: Samsung Electronics Co., Ltd., Gyeonggi-do 443-742 (KR)
(72) Inventor: Lee, Giyong, 443-742 Gyeonggi-do (KR)
(74) Representative: HGF Limited

(56) References cited:
- EP-A2- 1 363 183
- EP-A2- 1 376 390
- EP-A2- 1 376 448
- EP-A2- 2 105 844
- EP-A2- 2 309 371
- US-A1- 2002 196 238

## Description

### BACKGROUND OF THE INVENTION

### 1. Field of the Invention

The present invention relates generally to a method and an apparatus for data processing and, more particularly, to a method and an apparatus for gesture-based data input.

### 2. Description of the Related Art

Various apparatuses, or types of electronic devices, capable of performing communication and data processing, include, for example cellular communication terminals, Personal Digital Assistants (PDA), electronic organizers, smartphones, and tablet Personal Computers (PCs). These electronic devices have evolved into multifunctional devices that integrate various functions. For example, one such electronic device integrates various functions including voice and video telephony functions, a messaging function that includes Short Message Service/Multimedia Message Service (SMS/MMS) and email, a navigation function, a document editing function, a photographing function, a broadcast playback function, a multimedia (video and audio) playback function, an Internet access function, a messenger function, and a Social Networking Service (SNS) function.

With the introduction of touchscreens to electronic devices, it is possible to overcome limitations of traditional input means and further facilitate a user's manipulation of an electronic device. The user is capable of providing an input through a touch gesture with a finger or an electronic pen (e.g. stylus pen) on the touchscreen. For example, if the user makes a handwriting motion with the electronic pen, the electronic device stores the input as a drawing object (e.g., a drawing board function) or analyzes the stroke data (e.g., coordinates) to convert the handwriting motion to text or a figure (e.g., a writing recognition or figure recognition function).

US2002/0196238 A1 discloses a touch responsive display unit and method in which user inputs may include proximity based inputs.

EP2309371 A2 discloses a touch-sensitive display and method of control where one or more selection options are displayed on a touch-sensitive display and hovering touches are detected.

EP2105844 A2 discloses a mobile terminal and method of displaying information therein, where the mobile terminal includes a touch screen and a controller, and input to the touch screen for editing the displayed information may be based on a state of an object in near-proximity to the displayed information.

EP1363183 A2 discloses a transparent graphical user interface which overlays the user interfaces of other applications, where the provided user interface is configured to receive handwriting input and display handwriting objects represented by the handwriting input.

EP1376390 A2 discloses a writing guide for a free-form document editor where a guide for handwriting or drawing may be displayed in response to detecting user input as handwriting or drawing. This document discloses a method for data processing in an electronic device, the method comprising: displaying a page on a screen of the electronic device; detecting a user hover gesture. In response to the hover gesture: displaying a guidance object on a screen of the electronic device; receiving data input by a user; and displaying the data input by the user with the guidance object on the screen, when the data is received; wherein the method comprises combining the data input by the user with the guidance object, and storing the combined data input by the user and guidance object.

### SUMMARY OF THE INVENTION

An aim of certain embodiments of the present invention is to provide a gesture-based data processing method and apparatus that are capable of facilitating various types of data input on an editable page displayed on a screen of an electronic device.

Another aim of certain embodiments of the present invention is to provide a gesture-based data processing method and apparatus that are capable of sensing a hovering gesture made over the screen of the electronic device.

An additional aim of certain embodiments of the present invention aim of certain embodiments provide a gesture-based data processing method and apparatus that are capable of displaying a guide to prompt user input in response to a hovering gesture when an editable page is displayed on the screen of the electronic device.

A further aim of certain embodiments of the present invention is to provide a gesture-based data processing method and apparatus that are capable of displaying a guide in response to a hover-in event when an editable page is displayed on the screen of the electronic device, and displaying input data in response to a hover-out event.

Another aim of certain embodiments of the present invention is to provide a gesture-based data processing method and apparatus that are capable of improving user convenience and device usability by optimizing an environment for supporting data input on an editable page displayed on the screen of the electronic device.

In accordance with an aspect of the present invention, a method is provided according to claim 1.

In accordance with another aspect of the present invention, an apparatus is provided according to claim 8.

In accordance with another aspect of the present invention, a non-transitory computer-readable storage medium is provided according to claim 11.

The reader should bear in mind that some embodiments or examples of the description may not comprise all features of the invention as claimed.

### BRIEF DESCRIPTION OF THE DRAWINGS

The above and other aspects, features, and advantages of the present invention will be more apparent from the following detailed description when taken in conjunction with the accompanying drawings, in which:
FIG. 1 is a block diagram illustrating the configuration of an electronic device, according to an example of the present disclosure;
FIG. 2 is a flowchart illustrating a hovering gesture-based data processing method of the electronic device, according to an example of the present disclosure;
FIGS. 3A to 3D are diagrams illustrating screens displayed in association with gesture-based input operations of the electronic device, according to an example of the present disclosure;
FIGS. 4A to 4C are diagrams illustrating screens displayed in association with gesture-based input operations of the electronic device, according to another example of the present disclosure;
FIGS. 5A to 5C are diagrams illustrating screens displayed in association with gesture-based input operations of the electronic device, according to another example of the present disclosure;
FIGS. 6A to 6D are diagrams illustrating screens displayed in association with gesture-based input operations of the electronic device, according to another example of the present disclosure; and
FIG. 7 is a flowchart illustrating a hovering gesture-based data processing method of the electronic device, according to an example of the present disclosure.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed description of constructions or processes known in the art may be omitted to avoid obscuring the subject matter of the present invention.

Embodiments of the present invention provide an electronic device and a method for supporting the inputting of data. Specifically, a method and an apparatus are provided for processing data that is input with an application capable of recognizing various types of data (e.g., text, drawing, figure, and document) on an editable page, according to embodiments of the present invention.

In various embodiments of the present invention, the application may be any type of application that supports handwriting and drawing input functions, such as, for example, office, memo, email, message, travel organizer, drawing, web browser, and document editing applications. In various embodiments of the present invention, the application may be a type of application that is capable of providing an editable page and receiving data through the editable page.

According to various embodiments of the present invention, when using an application for inputting data to the electronic device, an application-specific guide appears or disappears in response to a user gesture. In various embodiments of the present invention, the user gesture may include, for example, user interaction in order for the electronic device to display the guide (e.g., a guidance object of the present invention). For example, the user gesture may include at least one of a hovering gesture detectable by the touchscreen and a hand gesture detectable by an infrared sensor, an illuminance sensor, or camera module.

According to various embodiments of the present invention, when an application page is displayed by the electronic device, a guidance object designated for the application appears in response to a hover gesture and disappears in response to removal of the hover gesture. The hover gesture is made with a specific input tool (e.g., a user's finger, an electronic pen, such as stylus pen).

According to various embodiments of the present invention, when an application page is displayed by the electronic device, a guidance object designated for the application appears in response to a hand gesture made by a user (or a certain object in replacement of user's hand), and disappears with the removal of the hand gesture (e.g., moving a hand out of a sensing area of the sensor). The hand gesture is detected by a sensor (e.g., an infrared sensor, an illuminance sensor), or a camera module (e.g., a front camera facing the same direction as a surface of the screen).

According to various embodiments of the present invention, a certain guidance object appears in response to a hover gesture such that the user is capable of inputting data (e.g., text, a drawing, a figure, and a document) and checking the data input process in real time when the hover gesture is removed. Similarly, the guidance object may appear in response to a hand gesture of the user, such that the user is capable of inputting data (e.g., text, a drawing, a figure, and a document), and checking the data input status in real time by removing the hand gesture while the guidance object is displayed.

In the following, a description of examples of the present disclosure is directed to a representative case in which the electronic device determines whether to display the guide in response to a hovering gesture. However, examples of the present disclosure are not limited thereto, and can be implemented with any type of user gesture (including, for example, a hand gesture) detectable by means of various sensors of the electronic device.

In various embodiments of the present invention, if an input gesture is detected within a certain distance or range of the electronic device, before contact of a certain input tool (e.g., a hovering gesture), the electronic device interprets this input gesture as a pre-action for writing or drawing. The electronic device displays a guidance object (e.g., a guidance line, a background design, and a background image) on the page of the screen to assist in a writing or drawing action of the user. In various embodiments of the present invention, the guidance object appears when the input tool is within a predetermined distance or range of the device (e.g., a hover gesture), and disappears when the input tool is removed from that distance or range. In various embodiments of the present invention, the gesture-based data processing method can be implemented in such a way that the guidance object is shown and hidden according to a distance of the input tool from the device.

In various examples of the present disclosure, the electronic device may recognize presence of an input tool (e.g., a user's finger or an electronic pen) by measuring an amount of electric current within a certain range without the input tool contacting the capacitive/resistive touchscreen. In various embodiments of the present invention, the hovering gesture denotes an event in which a certain input tool enters into a predetermined range from the electronic device. The hovering gesture is used to determine whether to show or remove a guidance object on the page. In various embodiments of the present invention, the hovering gesture may be transferred through an Application Program Interface (API).

In various embodiments of the present invention, the guidance object denotes a guide in a certain form that appears in response to the hover gesture in order to assist in inputting data. For example, the guidance object may appear in the form of horizontal lines spaced at regular intervals on the page for guiding the user in writing letters aligned horizontally. The guidance object may also appear as gridlines, a figure, or a background image, which assist the user in inputting data for a decorative purpose.

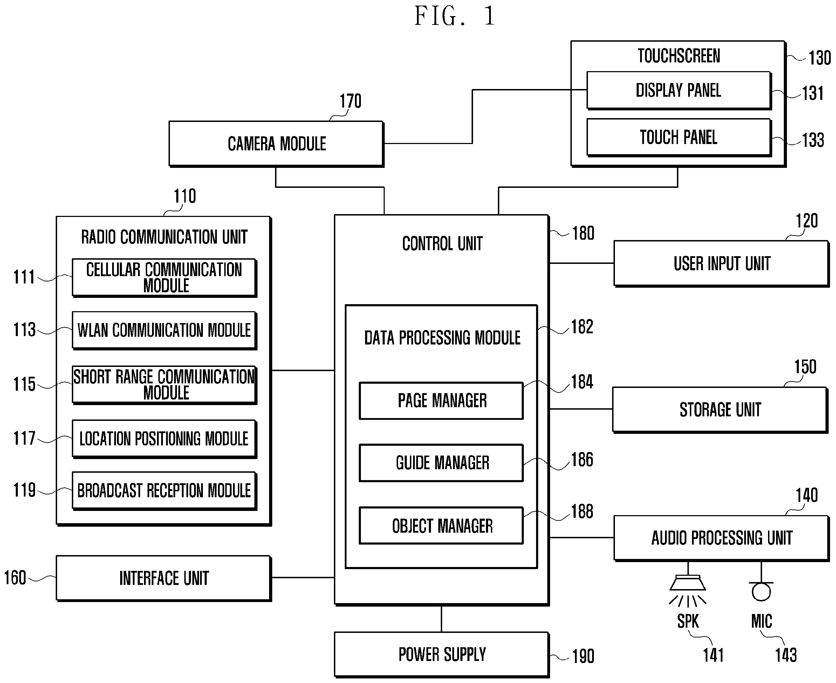

FIG. 1 is a block diagram illustrating the configuration of the electronic device, according to an example of the present disclosure.

As shown in FIG. 1, the electronic device includes a radio communication unit 110, a user input unit 120, a touchscreen 130, an audio processing unit 140, a storage unit 150, an interface unit 160, a camera unit 170, a control unit 180, and a power supply 190. The electronic device, according to an example of the present disclosure, can be implemented with or without one or more of the components depicted in FIG. 1. For example, when the electronic device, according to an example of the present disclosure, has no broadcast reception and playback function, some function modules (e.g., a broadcast reception module 119 of the radio communication unit 110) may be omitted. The electronic device, according to an embodiment of the present invention, may include various sensors (e.g., an infrared sensor, an illuminance sensor, and a camera module that is oriented in the same direction as the surface of the display unit).

The radio communication unit 110 is capable of communication through at least one of cellular communication, Wireless Local Area Network (WLAN) communication, short range communication, a location positioning systems (e.g., Global Positioning System (GPS)), and broadcast reception. For example, the radio communication unit 110 includes a cellular communication module 111, a WLAN communication module 113, a short range communication module 115, a location positioning module 117, and a broadcast reception module 119.

The cellular communication module 111 is capable of communicating radio signals with at least one of a base station of a cellular communication network, an external device, and various servers (e.g. integration server, provider server, content server, Internet server, cloud server). The radio signals may carry the voice telephony data, video telephony data, and text/multimedia message data.

The WLAN module 113 is responsible of establishing a WLAN link with an Access Point (AP) or another electronic device and capable of being embedded in the electronic device or implemented as an external device. There is various radio Internet access technologies available such as Wireless-Fidelity (Wi-Fi), Wireless Broadband (WiBro), World Interoperability for Microwave Access (WiMAX), and High Speed Downlink Packet Access (HSDPA). The WLAN module 113 is capable of establishing a WLAN link with another electronic device to transmit and receive various guidance objects selected by the user to and from the other electronic device. The WLAN module 113 is also capable of establishing WLAN link with various servers to receive various guidance objects. The WLAN module 113 may be in on-state always or turned on according to the user setting or input.

The short range communication module 115 is responsible for the short range communication of the electronic device. There are various short range communication technologies available such as Bluetooth, Bluetooth Low Energy (BLE), Radio Frequency Identification (RFID), Infrared Data Association (IrDA), Ultra Wideband (UWB), ZigBee, and Near Field Communication (NFC), etc. The short range communication module 115 is capable of transmitting and receiving various guidance objects to and from another electronic device according to the user's intension in the state connected to another electronic device. The short range communication module 115 may be in on-state always or turned on according to the user setting or input.

The location positioning module 117 is responsible for positioning the location of the electronic device, and Global Positioning System (GPS) module is one of the representative location positioning modules. The location positioning module 117 collects accurate distance and time information from at least three base stations and performs triangulation based on the acquired information to acquire 3-Dimentional (3D) location information with latitude, longitude, and altitude. The location positioning module 117 is also capable of calculating the location information based on the signals from three or more satellites in real time. The location information of the electronic device can be acquired using various methods.

The broadcast reception module 119 receives broadcast signals (e.g. TV broadcast signal, radio broadcast signal, and data broadcast signal) and/or information on the broadcast (e.g. broadcast channel information, broadcast program information, and broadcast service provider information) from an external broadcast management server through a broadcast channel (e.g. satellite broadcast channel, and terrestrial broadcast channel).

The input unit 120 generates a signal for controlling operation of the electronic device in response to user input. The input unit 120 may include, for example, a keypad, a dome switch, a touch pad (capacitive/resistive), a jog wheel, a jog switch, or a sensor (e.g., a voice sensor, a proximity sensor, a luminance sensor, an acceleration sensor, or a gyro sensor). The input unit 120 can be implemented with external buttons and/or virtual button on the touchscreen 130. The input unit 120 is capable of receiving user input for executing an application capable of editing a page, and generating a signal corresponding to the user input. The user input unit 120 is also capable of receiving user input for configuring a guidance object to be displayed on a specific page, or selecting or modifying the guidance object on the page. The user input unit 120 is further capable of generating a signal corresponding to the user input.

The touchscreen 130 is an input/output means responsible for input and display functions, simultaneously, and includes a display panel 131 and a touch panel 133. In an example of the present disclosure, the touchscreen 130 is capable of detecting a user's touch gesture by means of the touch panel 133 displaying a screen (e.g., an application execution screen (page screen), a page screen having a guidance object, an outbound call processing screen, a messenger screen, a game screen, or a gallery screen). The touchscreen 130 is also capable of generating an input signal corresponding to the touch gesture. Then the control unit 180 identifies the touch gesture and controls execution of an action corresponding to the touch gesture. The touchscreen 130 is also capable of detecting a hovering gesture while displaying an editable page, and generating an input signal corresponding to the hovering gesture.

The display panel 131 is capable of displaying (output) information processed by the electronic device in one or more of several modes (e.g., telephony mode, photographing mode). In an exemplary case that the electronic device operates in the telephony mode, the display panel 131 is capable of displaying a User Interface (Ul) or Graphic Ul (GUI) related to the telephony mode. In an exemplary case that the electronic device operates in the video telephony mode or a camera shooting mode, the display panel 131 is also capable of displaying the image or UI/GUI with captured and/or received picture. The display unit 131 is capable of displaying an execution screen (e.g., a page screen) corresponding to the application and shows or hides a specific guidance object in response to a hovering gesture made by the user on the page screen. For example, the display panel 131 is capable of showing the guidance object designated for the corresponding page according to the hovering gesture by the user, and removing the guidance object from the page according to removal of the hovering gesture by the user. The display panel 131 is also capable of showing the data input by the user overlapped with the guidance object on the page, and removing the guidance object when the hover gesture is removed such that only the user input data is displayed. The display panel 131 is also capable of supporting a display mode switching function for switching between a portrait mode and a landscape mode.

The display panel 131 can be implemented as any one of a Liquid Crystal Display (LCD), a Thin Film Transistor LCD (TFT LCD), a Light Emitting Diode (LED), an Organic LED (OLED), an Active Matrix OLED (AMOLED), a flexible display, a bended display, and a 3-Dimensional (3D) display. The display panel 131 can be implemented as a transparent or semitransparent display panel through which light penetrates.

The touch panel 133 is placed on the display panel 131 to detect a touch gesture of the user on the surface of the touch screen 130 (e.g., a single touch gesture, a multi-touch gesture, a photographing gesture, and a data input gesture). If the touch gesture is detected on the surface of the touchscreen 130, the touch panel 133 extracts the coordinates of the position of the touch gesture and transfers the coordinates to the control unit 170. The touch panel 133 generates a signal corresponding to the touch gesture to the control unit 170. The control unit 170 is capable of executing a function according to the signal transmitted by the touch panel 133, based on the position where the touch gesture is detected.

The touch panel 133 is capable of detecting the hovering gesture at a predetermined range from the surface of the touchscreen 130, and generating a signal corresponding to the detected hovering gesture. The touch panel 133 is capable of measuring an amount of electric current within a specific distance from the touchscreen 130 although there is no contact between an input tool and the touchscreen 130, and recognizing the tool and movement and retreat of the tool. The control unit 180 is capable of analyzing the hovering gesture represented by the signal from the touch panel 133, and executing a function (e.g., showing or removing the guidance object) corresponding to the analyzed hovering gesture.

The touch panel 133 is capable of receiving user input for executing an application capable of editing a page, configuring the guidance object to be presented on the page, or selecting or changing the guidance object while the page is displayed. The touch panel 133 is also capable of generating the input signal corresponding to the user input.

The touch panel 133 can be configured to converts the pressure applied at a specific position of the display panel 131, or the change of capacitance at a specific position of the display panel 131, to an electrical input signal. The touch panel 133 is capable of measuring the pressure of the touch input as well as the position and size of the touch. If a touch input is detected, the touch panel 133 generates corresponding signal(s) to a touch controller (not shown). The touch controller (not shown) is capable of processing the signal(s) and transferring the corresponding data to the control unit 180. In this way, the control unit 100 is capable of checking the touched area on the touchscreen 130.

The audio processing unit 140 is capable of transferring an audio signal input from the control unit 180 to a speaker (SPK) 141, and transferring an audio signal received through a microphone (MIC) 143 to the control unit 180. The audio processing unit 140 processes the voice/sound data received from the control unit 180 so as to output the audio signal through the speaker 141 in the form of audible sound wave, and processes the audio signal received through the microphone 143 to generate a digital signal for transfer to the control unit 180.

The audio processing unit 140 sends the audio signal received from the control unit 170 to the speaker (SPK) and sends the audio signal such as voice input through the microphone (MIC) to the control unit 180. The audio processing unit 140 is capable of processing the voice/sound data to output an audible sound wave through the speaker 141 and processing the audio signal including voice to generate a digital signal to the control unit 180.

The audio processing unit 140 is capable of outputting voice/sound data corresponding to the hovering gesture, while the page is displayed, under the control of the control unit 180. For example, the audio processing unit 140 is capable of outputting specific voice/sound data in showing the guidance object when the hovering gesture is detected, and different voice/sound data in hiding the guidance object when the hovering gesture is no longer detected, under the control of the control unit 180. The audio processing unit 140 is capable of receiving the voice data commanding to change (or select) the guidance object on the page, and transferring the voice data to the control unit 180. The audio processing unit 140 is also capable of receiving the voice data commanding to show or hide the guidance object while the page is displayed, and transferring the voice data to the control unit 180.

The speaker 141 is capable outputting audio data received by means of the radio communication unit 110 in any one of the above-described modes of the electronic device, and stored in the storage unit 150. The speaker 141 is also capable of outputting audio signal related to a function executed in the electronic device (e.g., application execution, guidance object presentation, guidance object hiding, inbound call reception, outbound call placing, data input, picture shooting, and media content playback).

The microphone 143 is capable of processing the sound input in any one of the above-described modes of the electronic device, to generate electric audio data. The microphone 143 can be implemented with various noise cancellation algorithms for removing noise generated in receiving the outside sound.

The storage unit 150 stores programs associated with information processing and control functions of the control unit 180, and temporarily stores input/output data (e.g., guidance object, contact information, document data, picture data, messages, chat data, and media contents including audio and video). The storage unit 150 is also capable of storing information of usage frequencies (e.g., an application usage frequency, a data usage frequency, a guidance object usage frequency, and multimedia content usage frequency), weights, and priorities. The storage unit 150 is also capable of storing data of various patterns of vibration and sound effects that are output in response to touch inputs made on the touchscreen 130.

The storage unit 150 stores an Operating System (OS) of the electronic device and application programs for controlling touchscreen-based input and display operations, showing and hiding the guidance object on an application page, overlapping the guidance object and the data input by the user. The storage unit 150 also semi-persistently or temporarily stores data generated in association with the application programs. The storage unit 150 is also capable of storing various settings for processing data in response to the hovering gesture of the user (e.g., guidance object display and various data input and display). The settings information may include mappings between guidance objects and pages. The settings information also may further include information on whether to store a link to the guidance object referenced in storing the data input together on the application page.

The storage unit 150 can be implemented with a storage medium of at least one of a flash type memory, a hard disk type memory, a micro type memory, a card type memory (e.g., a Secure Digital (SD) type memory and an eXtream Digital (XD) card type memory), a Random Access Memory (RAM), a Dynamic RAM (DRAM), a Static RAM (SRAM), a Read-Only Memory (ROM), a Programmable ROM (PROM), an Electrically Erasable PROM (EEPROM), a Magnetic RAM (MRAM), a magnetic disk memory, and an optical disk type memory. The electronic device can interoperate on the Internet with a web storage working as the storage unit 150.

The interface unit 160 provides an interface for external devices that are connectable to the electronic device. The interface unit 160 is capable of transferring data or power from the external devices to the internal components of the electronic device, and transferring internal data to the external devices. For example, the interface unit 160 can be provided with wired/wireless headset port, external charging port, wired/wireless data port, memory card slot, identity module slot, audio input/output port, video input/output port, earphone jack, etc.

The camera module 170 is responsible for a photographing function of the electronic device. The camera module 170 is capable of capturing a still or motion image. The camera module 170 is capable of outputting video data to the display unit 131 and the control unit 180. The camera module 170 may include an image sensor (or camera sensor) for converting an optical signal to an electric signal, and may also include an video signal processor for converting the electronic signal received from the image sensor to digital video data. The image sensor can be embodied as a Charge-Coupled Device (CCD) sensor or a Complementary Metal-Oxide-Semiconductor (CMOS) sensor. The camera module 170 is capable of providing an image processing function for supporting photo capture according to various options set by the user (e.g., zooming), a screen aspect ratio, and/or effects (e.g., a sketch effect, a mono effect, a sepia effect, a vintage effect, and a mosaic effect).

The control unit 180 controls overall operations of the electronic device. For example, the control unit 180 is capable of controlling voice telephony, data communication, and video telephony functions. The control unit 180 includes a data processing module 182 that processes data in response to the hovering gesture of the user on the application page, according to an embodiment of the present invention. In an embodiment of the present invention, the data processing module 182 can be implemented in the control unit 180 or as a separate element from the control unit 180. In various examples of the present disclosure, the data processing module 182 may include a page manager 184, a guide manager 186, and an object manager 188. The page manager 184, the guide manager 186, and the object manager 188 are described in more detail hereinafter.

The page manager 184 of the control unit 180 is capable of generating an editable page for receiving a user input. For example, the page manager 184 of the control unit 180 is capable of generating a page of a specific application (e.g., a document editing application, an email application, and a web browser).

The guide manager 186 of the control unit 180 is also capable of processing to show or remove the guidance object on the application page in response to the hovering gesture. For example, the guide manager 186 of the control unit 180 is capable of showing at least one guidance object designated for the corresponding page in response to the hovering gesture in viewing the application page. The guide manager 186 of the control unit 180 is also capable of processing to remove the guidance object on the application page when the hovering gesture is removed. Specifically, the guide manager 186 of the control unit 180 is capable of toggling between showing and removing the guidance object on the application page in response to the hovering gesture.

The object manager 188 of the control unit 180 is further capable of displaying data with or without the guidance object in response to the user input. For example, the object manager 188 of the control unit 180 is capable of displaying the data with the guidance object in response to the hover gesture, and without the guidance object when the hover gesture is removed.

The operations of the control unit 180 are described in greater detail below in the operation and control method of the electronic device with reference to accompanying drawings.

According to an embodiment of the present invention, the control unit 180 is capable of controlling various operations associated with the typical functions of the electronic device, as well as the above-described functions. The control unit 180 is capable of receiving input signals corresponding to various touch-based events supported on the touch-based input interface (e.g., touchscreen 130) and controlling functions in response to the input signal. The control unit 180 is also capable of controlling transmission/reception of various data through a wired or wireless communication channel.

The power supply 190 supplies power from an external power source or from an internal power source to internal components of the electronic device.

As described above, the electronic device according to one of various examples of the present disclosure, can be implemented with a computer-implemented page manager 184 for displaying a page of receiving user input, a computer-implemented guide manager 186 for showing or hiding guidance object on the page in response to a hovering event, and a computer-implemented object manager 188 for displaying data with the presence or absence of the guidance object in response to the user input.

As described above, the electronic device, according to an example of the present disclosure, can be any type of information communication and multimedia device equipped with at least one of Application Processor (AP), Graphic Processing Unit (GPU), and Central Processing Unit (CPU). For example, the electronic device can be any of a cellular communication terminal operating with various communication protocols corresponding to the communication systems, a tablet PC, a smartphone, a digital camera, a Portable Multimedia Player (PMP), a Media Player (e.g., an MP3 player), a portable game console, a Personal Digital Assistant (PDA), etc. Also, the gesture-based control method, according to an embodiment of the present invention can be applied to various display devices, such as, for example, a digital Television (TV), Digital Signage (DS), a Large Format Display (LFD), a laptop computer, and a desktop computer.

The gesture-based data processing method, according to an embodiment of the present invention can be implemented in software, hardware, or combination of both hardware and software, and stored in a computer-readable storage medium. In the case of a hardware implementation, the gesture-based data processing method, according to an embodiment of the present invention, can be implemented with at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and other electrical units which perform certain tasks.

Embodiments of the present invention can be implemented by the control unit 170 itself. In the case of being implemented in software, the procedures and functions described in the embodiments of the present invention can be implemented with software modules (e.g., page manager 184, guide manager 186, and object manager 188). The software modules are capable of performing at least one of the above-described functions and operations.

The storage medium can be any type of computer-readable storage media storing the program commands of displaying an editable page for receiving a user input, showing and hiding guidance object on the page in response to the user gesture, and displaying the data with the presence or absence of the guidance object in response to the user input.

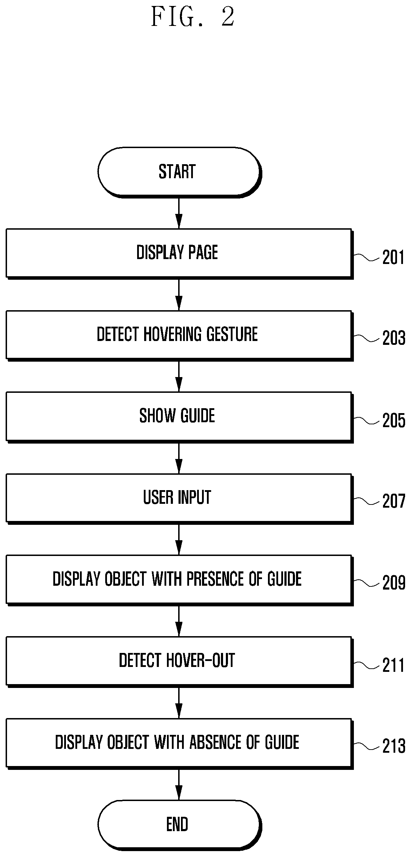

FIG. 2 is a flowchart illustrating the hovering gesture-based data processing method of the electronic device, according to an example of the present disclosure.

Referring to FIG. 2, the control unit 180 controls the display of a page for receiving a user input, in step 201. For example, the control unit 180 executes an application in response to a user request, and controls the display of a page on the execution screen of the application. According to examples of the present disclosure, the page is configured to receive user input and present various data in response to the user input. In various examples of the present disclosure, the page is capable of toggling a specific guidance object configured in response to the hovering gesture of the user. For example, the guidance object can be shown or removed. In various embodiments of the present invention, the application can be any type of application providing an editable page for receiving various types of data (e.g., text, an image, a command, etc.) such as, for example, an office application, a memo application, an email application, a messaging application, a travel organizer application, a drawing application, a web browser application, and a document editing application.

The control unit 180 detects a hovering gesture over the touchscreen 130, in step 203. For example, the user may make a hovering gesture with a certain input tool, by entering within a predetermined range from the surface of the touchscreen 130, while the page is displayed, such that the control unit 180 detects the hovering gesture.

The control unit 180 controls the display of a guide in response to the hovering gesture, in step 205. For example, the control unit 180 is capable of displaying a predetermined guidance object on the page in response to the hovering gesture. The control unit 180 is capable maintaining the display of the guidance object as long as the hovering gesture is maintained and, at this time, the input tool may be of hovering or contacting the surface of the touchscreen 130 to input data (e.g., a text object or a drawing object).

The control unit 180 detects user input, in step 207. For example, the control unit 180 is capable of detecting a signal corresponding to the user input for entering certain data (e.g., a text object or a drawing object) on the page while the guidance object is present on the page. In various examples of the present disclosure, the user input may be made with at least one user gesture (e.g., writing and drawing gestures).

The control unit 180 controls the display of an object corresponding to the user input, in step 209. For example, the control unit 180 is capable of displaying the object corresponding to the user input (e.g., a text object or a drawing object) along with the guidance object.

The control unit 180 detects removal of the hovering gesture, in which the input tool is removed from the surface of the touchscreen 130 and the above-described range from the surface of the touchscreen 130, in step 211. For example, the user may make lifting the input tool beyond a predetermined distance from the touchscreen 130 while the guidance object is present.

The control unit 180 controls the display of the object without the guidance object in response to detection of removal of the hovering gesture, in step 213. For example, if the hovering gesture is removed while the guidance object is shown on the page, the control unit 180 controls the display of only the object corresponding to the user input (e.g. the text object or the drawing object) without the guidance object.

Although not shown in FIG. 2, the hover in event may be detected according to the hovering gesture of the user in the state of step 213. In this case, the control unit 180 is capable of controlling such that the guide reappears in response to the hover in event while maintain the display of the objects input until then. That is, the control unit 180 is capable of toggling display of the guidance object in response to the hovering gesture of the user.

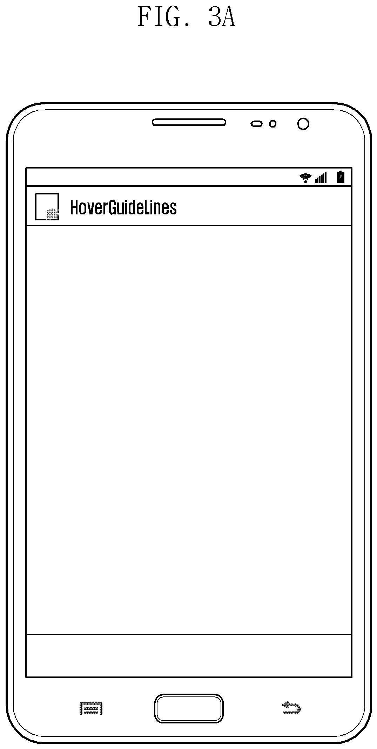

FIGS. 3A to 3D are diagrams illustrating screens displayed in association with gesture-based input operations of the electronic device, according to an example of the present disclosure.

FIG. 3A shows a screen displayed when the user executes an application associated with the gesture-based data processing, according to an example of the present disclosure. FIGS. 3A to 3D are directed to an example in which the application is a memo application. However, the examples of the present disclosure are not limited to the memo application, and can be applied to any application operating with an editable page for receiving various types of data.

As shown in FIG. 3A, if the user inputs a command for executing the memo application, the electronic device executes the memo application and displays an execution screen with a page UI or GUI.

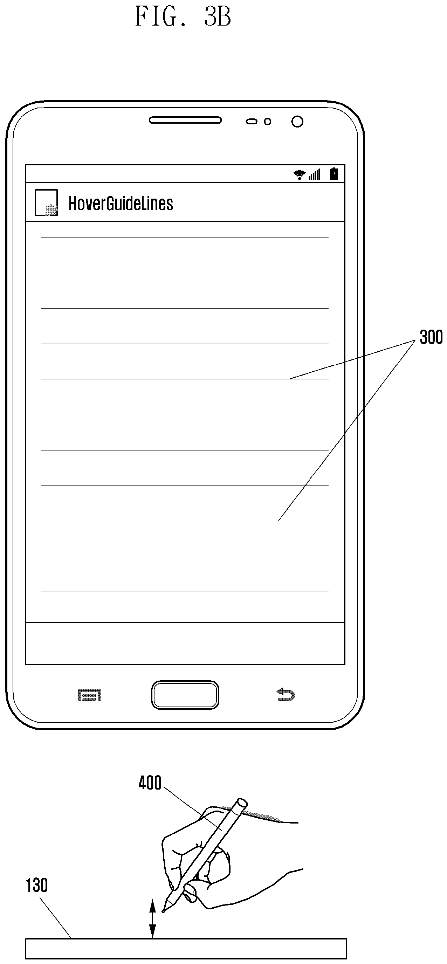

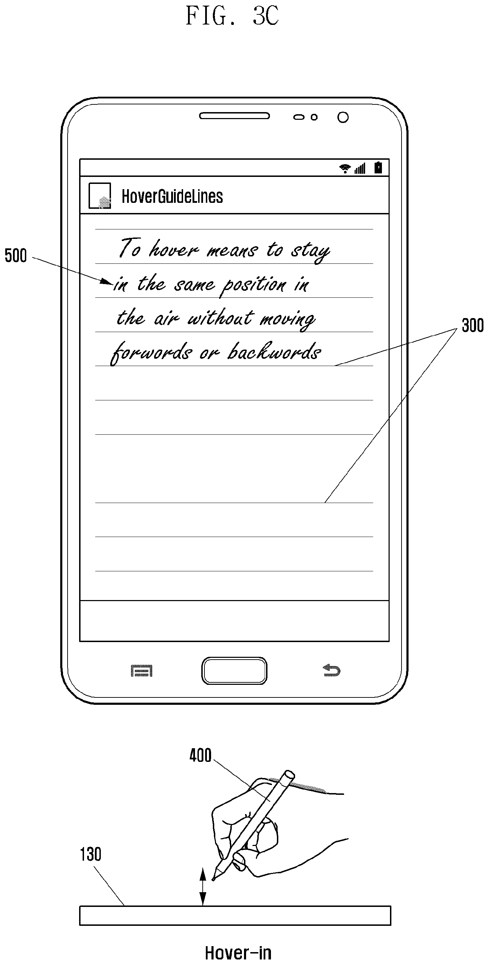

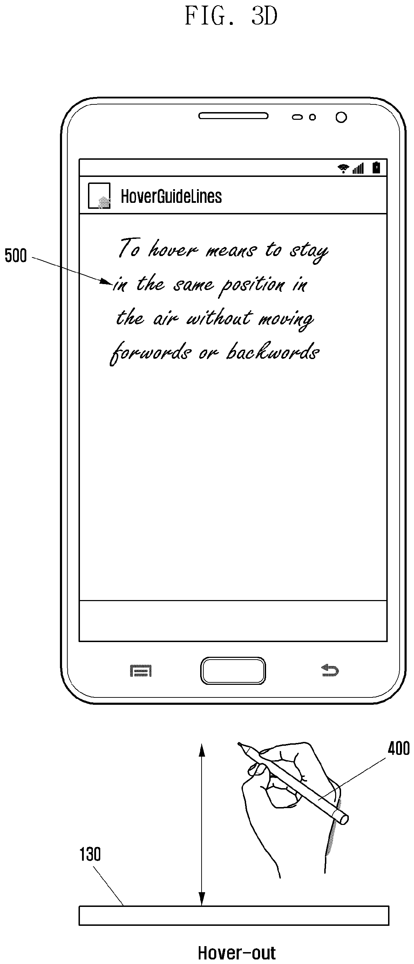

With a page in the state shown in FIG. 3A, the user may make a hovering gesture by placing an input tool (e.g., a user's finger or an electronic pen) 400 within a predetermined range from the surface of the touchscreen 130, as shown in FIG. 3B. The control unit 180 detects the hovering gesture and controls the display of a guidance object (e.g., horizontal lines) 300 on the page in response to the hovering gesture, as shown in FIG. 3B. Specifically, FIG. 3 shows the screen of the electronic device when the hovering gesture is detected while the memo application page is displayed.

With a page in the state shown in FIG. 3B, the user may input certain data (e.g., a text object formed by a text-writing gesture) 500. For example, the user may input the text object with a writing gesture along the guidance object (e.g., horizontal lines) 300, as shown in FIG. 3C. Specifically, FIG. 3C shows a screen of the electronic device when the text object is input while the guidance object 300 is shown on the application page.

With a page in the state shown in of FIG. 3C, the user may make a gesture removing the input tool 400 from the touchscreen 130, and lifting the input tool 400 beyond a predetermined range from the surface of the touchscreen 130, as shown in FIG. 3D. The control unit 180 detects removal of the hovering gesture and controls the display such that the text object 500, input by the user, is displayed without the guidance object 300, which was removed from the application page in response to removal of the hovering gesture, as shown in FIG. 3D. Specifically, FIG. 3D shows a screen of the electronic device, when removal of the hovering gesture is detected after the input of the text object.

As described above with reference to FIGS. 3A to 3D, the guidance object (e.g., horizontal lines) 300 is visible with the hovering gesture of the input tool 400, and hidden with removal of the hovering gesture of the input tool 400, in various examples of the present disclosure.

If the input tool 400 is detected on a drawing-recognition page, the guidance object (e.g., horizontal lines) 300 may appear semi-transparently on the page. The guidance object assists the user to write text as aligned horizontally. If the user lifts the input tool 400 beyond a predetermined range from the screen, only the text 500 input by the user is displayed. The guidance object (e.g., horizontal lines) 300 is provided for the purpose of writing-assistance, and thus, is ignored when the input data is stored or transmitted. For example, the input data may be stored in itself or along with the page as the background. According to an embodiment of the present invention, however, the input data may be stored as combined with the guidance object, according to the user's intention.

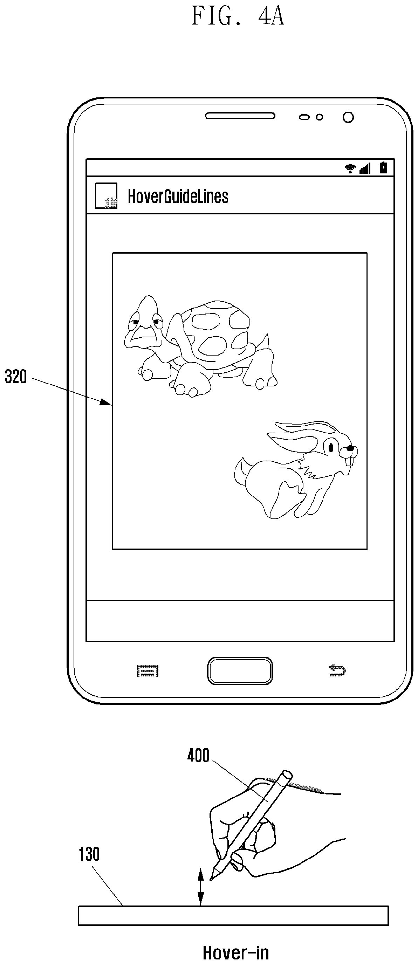

FIGS. 4A to 4C are diagrams illustrating screens displayed in association with gesture-based input operations of the electronic device, according to another example of the present disclosure.

FIG. 4A shows a screen displayed when the user makes a hovering gesture to input data (e.g., a drawing object in FIGS. 4A to 4C), when the screen is in the state shown in FIG. 3A.

As shown in FIG. 4A, the user may make a hovering gesture above the touchscreen 130 with an input tool 400. The control unit 180 detects the hovering gesture and controls such that a guidance object (e.g., a background sketch) 320 appears on the page, as shown in FIG. 4A. Specifically, FIG. 4A shows a screen of the electronic device when the hovering gesture is made by the user.

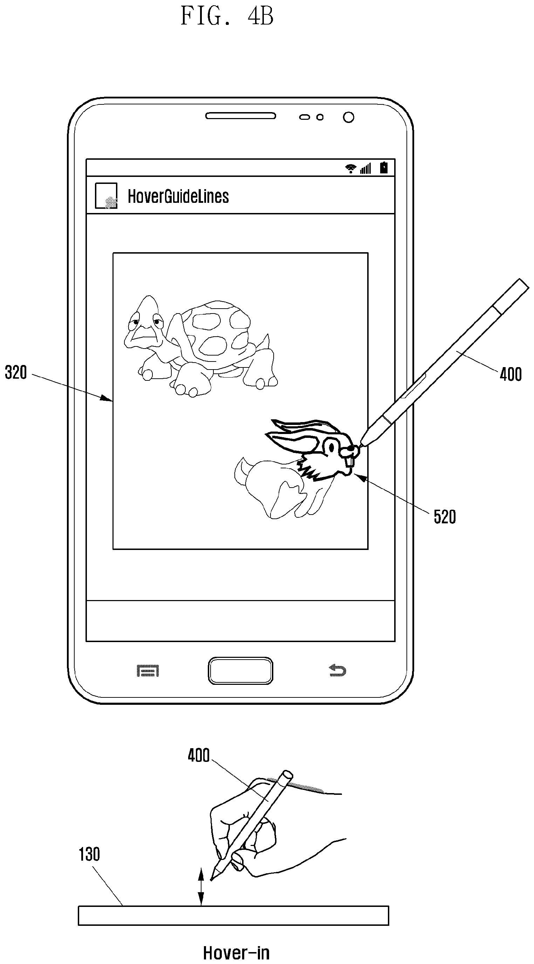

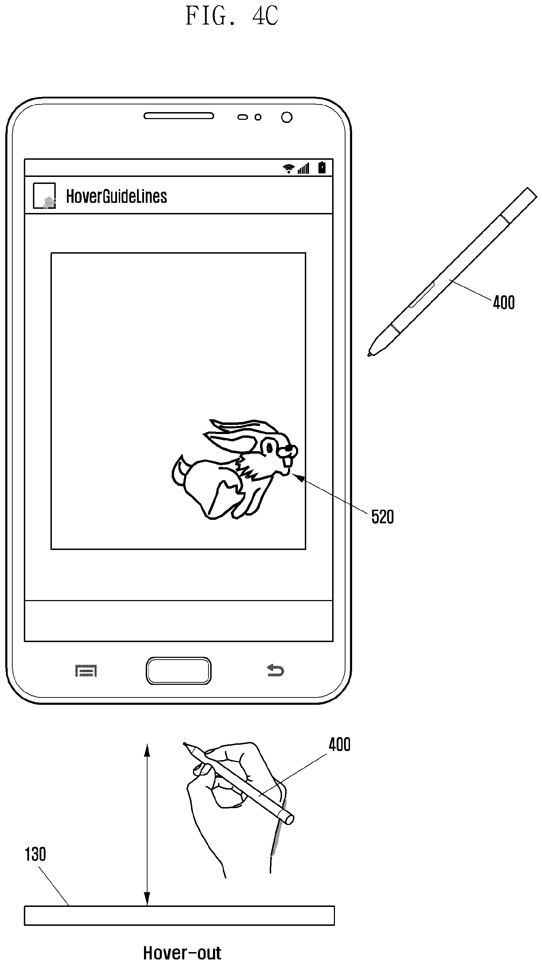

While the screen is in the state shown in FIG. 4A, the user is capable of inputting data (e.g., the drawing object drawn by the user as shown in FIGS. 4B and 4C) 520. For example, the user is capable of drawing an object on the guidance object (e.g., background sketch) 320, as shown in FIG. 4B. Specifically, FIG. 4B shows a screen of the electronic device when the user draws an object while the guidance object is visible on the page.

While the screen is in the state shown in FIG. 4B, the user may remove the hovering gesture with the input tool 400 from above the touchscreen 130, as shown in FIG. 4C. The control unit 180 detects the removal of the hovering gesture and controls such that only the drawing object 520 remains on the page in response to removal of the hovering gesture, as shown in FIG. 4C. Specifically, FIG. 4C shows a screen of the electronic device when the user removes the hovering gesture after inputting the drawing object with the assistance of the guidance object 320.

As described with reference to FIGS. 4A to 4C, the guidance object (e.g., background sketch) 320 appears in response to the hovering gesture of the input tool 400 and disappears in response to removal of the hovering gesture of the input tool 400 dynamically on the page, in a manner similar to that described above with respect to FIGS. 3A to 3D.

For example, if the input tool is detected within a distance above the screen displaying a drawing application page, the guidance object (e.g., background sketch) 320 appears on the page semi-transparently. Then the user is capable of drawing an object in detail with the assistance of the guidance object (e.g., background sketch) 320. If the user lifts the input tool 400 out of a predetermined distance from the screen displaying the page, i.e. hover-out gesture is detected, the guidance object (e.g. background sketch) is hidden such that the object drawn by the user is left visible. In various embodiments, the guidance object (e.g. background sketch) 320 appears and disappears dynamically in response to the hover-in and hover-out gestures made on the screen displaying the page of the application capable of recognizing various data input gestures made with the input tool 400.

Since the input tool 400 has to approach the screen in order for the user to draw an object on screen, it is possible to configure the hover-in gesture detectable and provide a background sketch on the page semi-transparently in response thereto. The user is capable of drawing an object in detail with the assistance of the background sketch. If the input tool 400 hovers out of the distance range from the screen, the background sketch disappears such that the user can check object drawn until then intuitively.

According to an example of the present disclosure, the guidance object provision mode for providing the guidance object (e.g., background sketch) based on the hovering gesture, can be turned on/off with a menu option. Also, it is possible to bring a figure or drawing template provided by the application, or a picture taken from the web browser or gallery application or captured by the camera module, as the background sketch while the guidance object provision mode is on. According to an example of the present disclosure, the guidance object appearing in the guidance object provision mode may be any type of data stored in memory devices connected to the electronic device. For example, the guidance object may be data stored in the internal memory of the electronic device or received from an external storage (e.g., a content server or a cloud server) connected through a network.

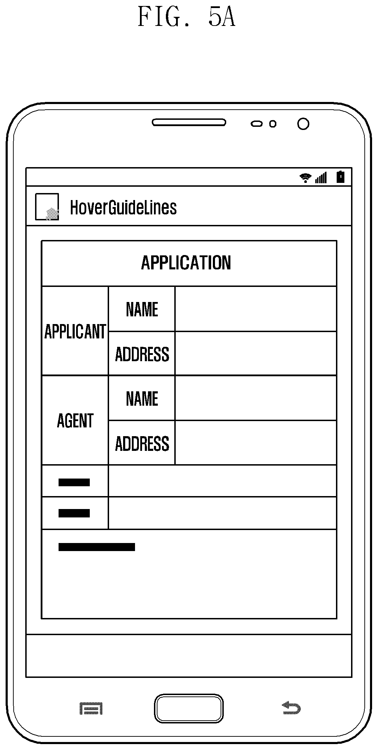

FIGS. 5A to 5C are diagrams illustrating screens displayed in association with gesture-based input operations of the electronic device, according to another example of the present disclosure.

In the example of the present disclosure illustrated in FIGS. 5A to 5C, the description is directed to the document editing application. However, the embodiments of the present invention are not limited thereto, and can be applied to any application operating with an editable page for receiving various types of data.

As shown in FIG. 5A, if the user inputs a command for executing a document editing application, the electronic device executes the corresponding application and displays a document page UI or GUI in a predetermined format.

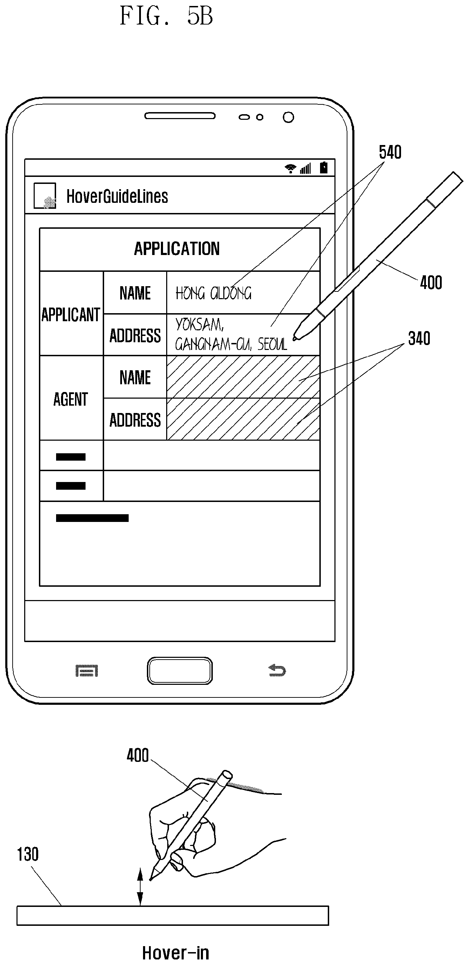

With a screen in the state as shown in FIG. 5A, the user may make a hovering gesture with an input tool 400 above the touchscreen 130, as shown in FIG. 5B, in order to input certain data (e.g., text object filling the fields of a given format on the page). The control unit 180 detects the hovering gesture and controls the display to show a guidance object (e.g., engraved object, embossed object, or shading object) 340 in a certain field on the page, as shown in FIG. 5B, in response to the hovering gesture. For example, the page is provided with active fields allowing for user input and inactive fields not allowing for user input. According to an example of the present invention, the inactive fields are marked with the guidance object as an engraved area, an embossed area, or a shaded area. Specifically, FIG. 5B shows the screen of the electronic device when the hovering gesture is detected while the document editing application page is displayed.

With a screen in the state shown in FIG. 5B, the user is capable of inputting data (e.g., a text object in the name and address fields of the given fields) 540. For example, the user is capable of distinguishing between the inactive fields marked with the guidance object 340 (e.g., agent name and address fields) and the active fields without the guidance object 340 (e.g., applicant name and address fields). The user is then capable of filling the active fields with text objects. Specifically, FIG. 5B shows the screen of the electronic device when the user has filled the active fields with the text objects, leaving the inactive fields empty.

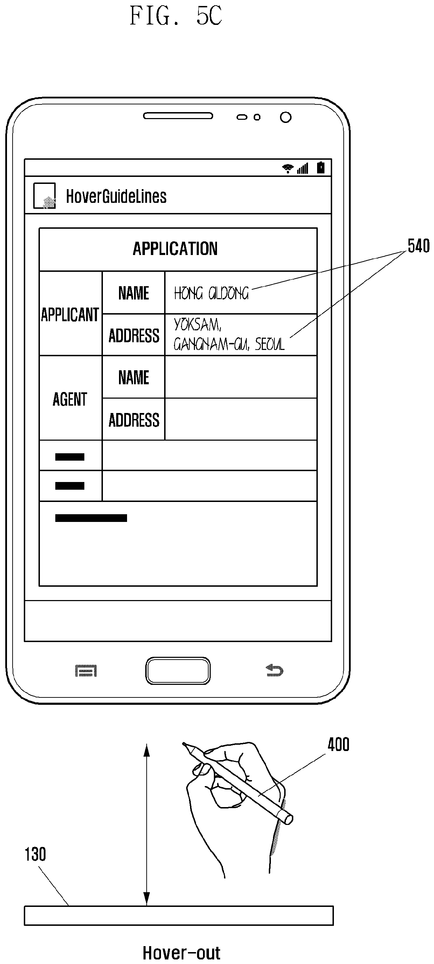

With a screen in the state shown in FIG. 5B, the user may remove the hovering gesture with the input tool 400 from above the touchscreen 130, as shown in FIG. 5C. The control unit 180 is capable of detecting removal of the hovering gesture and controlling the display such that the text objects 540 input by the user are displayed on the page without the guidance object 340, as shown in FIG. 5C. Specifically, FIG. 5C shows the screen of the electronic device when the input tool 400 is moved out of a predetermined range from the screen, after the user inputs the text objects in active fields of the document.

As described with reference to FIGS. 5A to 5C, the display of the guidance object (e.g. engraved, embossed, and shaded parts) 340 in provided response to hovering gesture of the input tool 400. Specifically, in the example of FIGS. 5A to 5C, the inactive fields of the document are dimmed to inform the user of those fields that should not be filled, according to an embodiment of the present invention.

According to various examples of the present disclosure, the guidance object 340 is provided to notify the user of active regions allowing for drawing or writing input or inactive regions not allowing for user input with a guide. According to an example of the present disclosure, a certain document format to be filed in a public office or exit/entry process can be provided with active and inactive fields. Accordingly, if the hover-in event is detected, the electronic device dims out the inactive fields in order to prevent the user from attempting data input to the inactive fields.

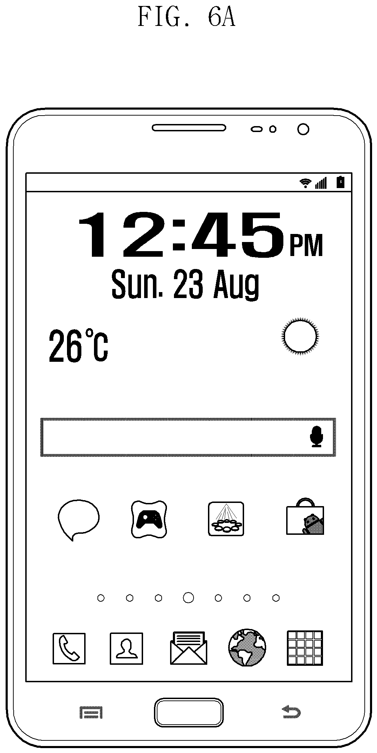

FIGS. 6A to 6D are diagrams illustrating screens displayed in association with gesture-based input operations of the electronic device, according to another example of the present disclosure.

FIG. 6A shows an exemplary screen of the electronic device displayed when the user executes a specific application for performing the gesture-based operations according to an example of the present disclosure. In the embodiment of FIGS. 6A to 6D, the description is directed to the case of a home screen application for providing a home screen or a web browser application for providing a webpage on the screen. However, the examples of the present disclosure are not limited thereto, and can be applied to any application operating with an editable page for receiving various types of data.

As shown in FIG. 6A, the electronic device executes a home screen application (or web browser) in response to the user request, such that the home screen Ul or GUI is displayed.

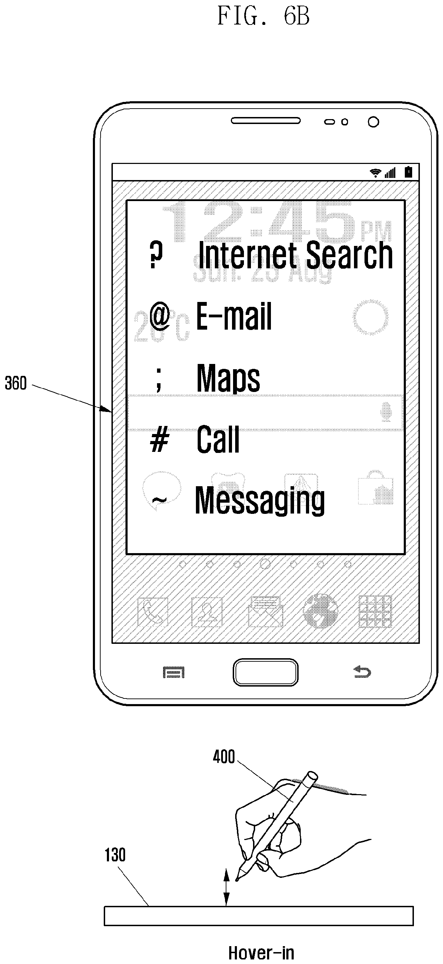

With a screen that is in the state shown in FIG. 6A, the user may make a hovering gesture with the input unit 400 above the touchscreen 130 to input certain data (e.g., to draw a certain figure, symbol, letter, etc.) on the page, as shown in FIG. 6B. Then the control unit 180 is capable of detecting the hovering gesture, and controlling the display of a guidance object (e.g., a predetermined quick command list) 360 in response to the hovering gesture. As shown in FIG. 6B, a quick command list (e.g., figures, symbols, letters, etc.) and corresponding executable functions, listing the quick commands available on the given page, is displayed as shown in FIG. 6B. Specifically, FIG. 6B shows the screen of the electronic device when the hovering gesture is detected while the home screen application is running on the display.

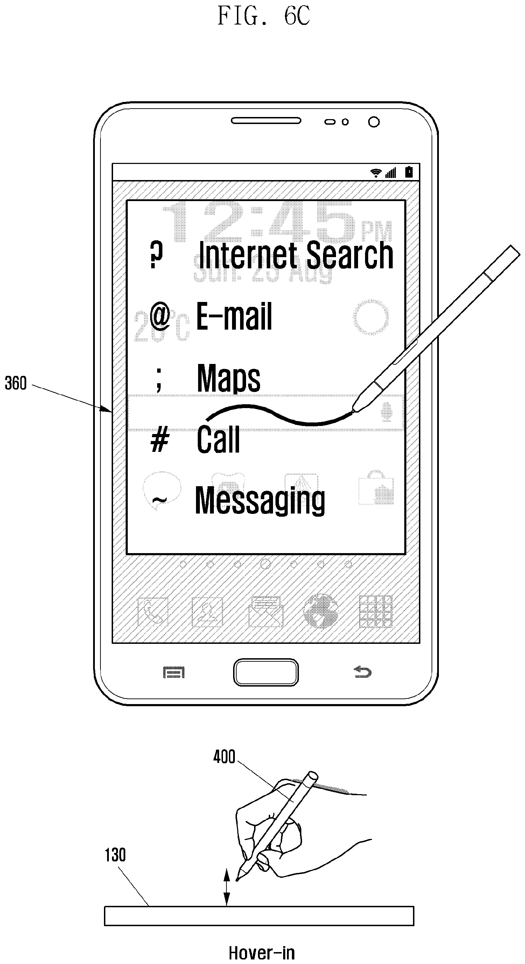

With a screen that is in the state shown in FIG. 6B, the user may input certain data (e.g., a figure object corresponding to a quick command). For example, the user is capable of inputting a figure object corresponding to a specific quick command (e.g., '-') among the quick commands (e.g., '?', '@', ';', '#', and '-') using the guidance object 360, as shown in FIG. 6C. Specifically, FIG. 6C shows the screen of the electronic device when the user inputs a figure object representing a certain quick command, when the guidance object 360 is displayed.

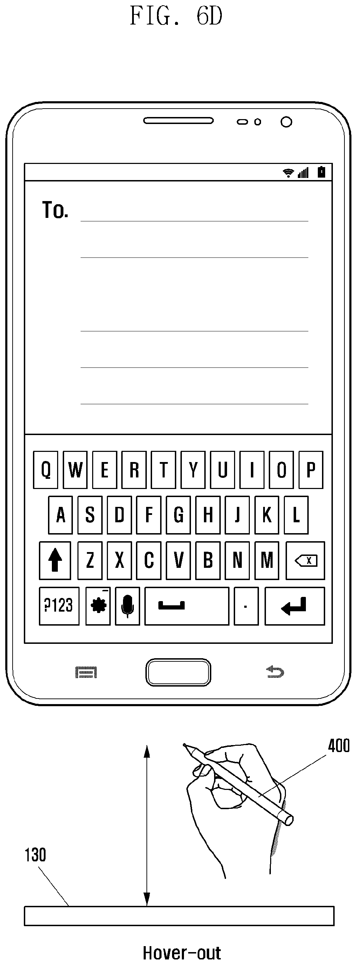

If a figure representing a certain quick command is drawn while the user maintains the hovering gesture with the input tool 400, the electronic device retrieves the quick command corresponding to the figure and executes the function indicated by the quick command with the display of the execution screen. For example, if the figure object input is made by the user as shown in FIG. 6C, the electronic device executes the command corresponding to the figure object to display the execution screen of FIG. 6D.

FIG. 6D shows a screen of the electronic device when a function (or application) is executed in response to the quick command input by the user. According to an example of the present disclosure, if the user input a figure object (e.g., ∼) designated for execution of a messaging application, the electronic device checks the quick command corresponding to the figure object. The electronic device checks the message application mapped to the quick command, and executes the messaging application with the display of the execution screen, as shown in FIG. 6D. In an example of the present disclosure, the execution screen of the application executed in response to the gesture-based quick command can be provided regardless of the state of the hovering gesture. While the hovering gesture is maintained, the message application execution screen may be maintained below the guidance object 360. When the hovering gesture is no longer maintained, the messaging application execution screen is displayed without the guidance object 360.

For example, the user is capable of removing the hovering gesture with the input tool 400 above the touchscreen 130, as shown in FIG. 6D. The control unit 180 is capable of detecting the removal of the hovering gesture and controlling the display such that the execution screen of the messaging application corresponding to the quick command made with the input of the figure object is displayed without the guidance object 360. Specifically, FIG. 6D shows the screen of the electronic device when the input tool 400 is no longer performing a hovering gesture after input of the quick command with the figure object, according to the guide of the guidance object 360.

As described with reference to FIGS. 6A to 6D, the guidance object (e.g., predetermined quick commands and execution information thereon) to be referenced by the user can be configured to appear on the page screen in accordance with the hovering gesture.

For example, the user may encounter the situation in which the user has no idea of what to do in attempting to use a function of the electronic device. In various embodiments of the present invention, the electronic device can be configured to provide the user with information on the manipulation tips, available functions of application, quick commands, help information (e.g., text or pictogram-based tutorial) etc., in association with the hovering gesture. Specifically, the electronic device is capable of semi-transparently providing the guidance object 360 to assist the user in making a follow-up action upon detection of a hovering gesture.

The user may also encounter a situation in which the user has no idea of what to do with the electronic device when operating an application with functions executable according to the writing recognition or gesture recognition-based quick commands. For example, the user may not know that "?" is designated for search command execution and "@" is designated for email function execution in association with the use of the electronic device. According to an embodiment of the present invention, the electronic device is capable of detecting the hovering gesture made with an input tool above an application page screen, and providing the user with the information on the actions available to be taken in response to the hovering gesture.

According to various examples of the present disclosure, the electronic device can be configured such that a certain guidance object designated for the corresponding application appears in response to the hover-in event and disappears in response to the hover-out event. In various examples, the guide display mode may be on/off according to the user settings. At least one guidance object can be designated per page in various applications in the guide display mode according to the user settings.

The user is capable of configuring various types of guidance objects through a guidance object setting menu screen provided by the electronic device. For example, the guidance object is capable of being designed in the form of any one of a figure, a symbol, a letter (or letter string), an image, a template, and a visual effect (e.g., engraving, embossing, shading, and dimming effects). The guidance object can be generated using a picture captured by the camera unit 170, stored in the storage unit 150, or received from a server, and defined in a new form with a certain tool according to the user's intention.

When a plurality of guidance objects are mapped to a specific page, a selection window listing the guidance objects can be provided in response to the hovering gesture, such that the user selects one of the guidance objects.

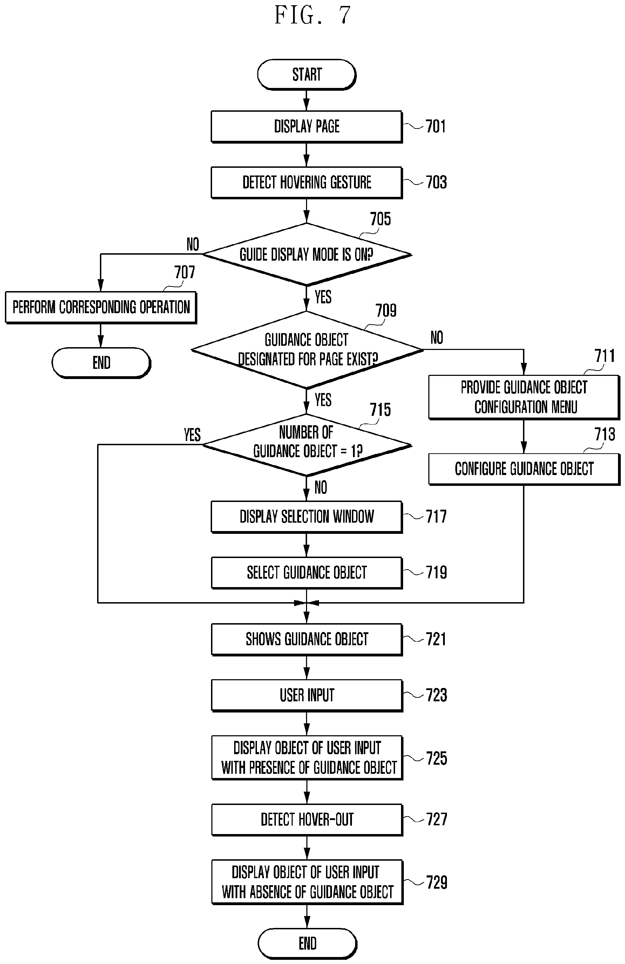

FIG. 7 is a flowchart illustrating the hovering gesture-based data processing method of the electronic device, according to an example of the present disclosure.

Referring to FIG. 7, the control unit 180 controls the display of a page for receiving a user input, in step 701. For example, the control unit 180 executes an application in response to a user request, and controls the display of a page screen. According to an embodiment of the present invention, the page is capable of receiving user input and displaying various data corresponding to the user input. In an embodiment of the present invention, the page is capable of toggling a guidance object in response to a hovering gesture made by the user.

The control unit 180 detects the hovering gesture occurring above the touchscreen 130, in step 703. For example, the user is capable of making the hovering gesture within a predetermined distance from the surface of the touchscreen 130 while the page is displayed, and the control unit 180 is capable of detecting the hovering gesture.

Upon detection of the hovering gesture, the control unit 180 determines whether the guide display mode has been turned on, in step 705. For example, if the hovering gesture is detected, the control unit 180 determines whether to display a predetermined guidance object depending on the configuration of the guide display mode.

If it is determined that the guide display mode has been turned off, the control unit 180 performs a corresponding operation, in step 707. For example, the control unit 180 may ignore the hovering gesture, or may perform a specific operation corresponding to the hovering gesture when the guide display mode has been turned off. For example, the control unit 180 may call for a predetermined menu in response to the hovering gesture, or may execute a function (e.g., zooming operation) mapped to the hovering gesture.

If it is determined that the guide display mode has been turned on, the control unit 180 determines whether there is a guidance object corresponding to the page, in step 709. For example, the control unit 180 may determine to display the guidance object when the guide display mode has been turned on, and may determine whether there is at least one guidance object designated for the corresponding page.

If it is determined that there is no guidance object corresponding to the page, the control unit 180 displays a guidance object configuration menu, in step 711, and configures a guidance object in response to user input with respect to the configuration menu, in step 713. For example, the control unit 180 is capable of displaying a menu window having menu items for configuring a guidance object. The user is capable of performing selection of a guidance object to be mapped to the page in the menu window.

According to an embodiment of the present invention, if a guidance object is to be acquired through capturing an image, the user is capable of activating the camera module 170 by selecting a camera item from the menu window and taking the captured image as the guidance object. If a guidance object is to be acquired from a gallery application, the user is capable of executing a gallery application by selecting a gallery item from the menu window and selecting one of the pictures (or images) listed by the gallery application for use as a guidance object. If a guidance object is to be acquired by selecting a figure, the user is capable of selecting a figure list item from the menu window to display a figure list and select a figure from the figure list for use as a guidance object. If a guidance object is to be acquired through web search, the user is capable of selecting a web search item from the menu window to search the web for the related images, figures, letters, symbols, etc., and select one of the found objects for use as a guidance object. Specifically, according to examples of the present disclosure, the guidance object can be acquired from the inside of the electronic device or the outside of the electronic device (e.g., from servers and other electronic devices).

If it is determined that there is a guidance object corresponding to the page, in step 709, the control unit 180 determines whether there is a single guidance object corresponding to the page, in step 715.

If it is determined that there is only one guidance object corresponding to the page, the methodology proceeds to step 721. If it is determined that there are multiple guidance objects corresponding to the page, the control unit 180 may display a selection window listing the guidance objects corresponding to the page, in step 717, such that the user selects one of the guidance objects, in step 719. Although the description is directed to the case where one guidance object is designated for one page in an embodiment of the present invention, the present invention is not limited thereto. According to various embodiments of the present invention, one or more guidance objects can be designated for one page according to the user's selection (or configuration).

When a guidance object is configured at step 713, when it is determined that there is a single guidance object corresponding to the page at step 715, or when a guidance object is selected from the selection window at step 719, the control unit 180 controls the display such that the guidance object appears on the page, in step 721. For example, the control unit 180 is capable of processing the corresponding operation in response to the hovering gesture, and then displaying the corresponding guidance object on the page. The input tool may be in the state of hovering above the screen or being in contact with the surface of the touchscreen 130 for inputting data (e.g., a text object or a drawing object).

The control unit 180 detects a user input, in step 723. For example, the control unit 180 is capable of detecting a signal corresponding to the user input of data (e.g., a text object or a drawing object) on the page having the guidance object. In an example of the present disclosure, the signal corresponding to the user input may include at least one user gesture (e.g., a writing input or a drawing input).

The control unit 180 controls the display of an object corresponding to the user input, in step 725. For example, the control unit 180 is capable of simultaneously displaying the guidance object designated for the page and the object corresponding to the user input (e.g., a text object or a drawing object).

The control unit 180 detects removal of the hovering gesture, in step 727, in which the input tool is lifted from the surface of the touchscreen 130 and beyond a predetermined distance from the touchscreen 130, while the guidance object is visible.

The control unit 180 displays the data object without the guidance object, in response to removal of the hovering gesture, in step 729. For example, if the hovering gesture is removed while the guidance object is visible, the control unit 180 controls the display such that only the data object (e.g., a text object or a drawing object) is displayed without the guidance object on the page.

Although not depicted in FIG. 7, the hovering gesture may be detected again, while the page is in the state of step 729. The control unit 180 controls the display such that the guidance object is again visible in response to the hovering gesture. In an embodiment of the present invention, the control unit 180 is capable of toggling the visibility of the guidance object in response to input and removal of the hovering gesture.

Although not depicted in FIG. 7, according to an example of the present disclosure, new guidance objects may be configured through steps 711 and 713, while performing steps 715, 717, and 719.

Although not depicted in FIG. 7, according to an example of the present disclosure, the user is capable of inputting specific data with the assistance of the guidance object on the page, and storing specific input data. According to an example of the present disclosure, the data object and guidance object can be stored independently, selectively, combined, synthesized with the page, or as mapped to link information.

In the above-described embodiments of the present invention, the descriptions have been directed to the case where the guidance object is displayed based on the user's hovering gesture. According to an example of the present disclosure, however, the present disclosure can be implemented with hand gestures detectable with various sensors (e.g., an infrared sensor, an illuminance sensor, and/or a camera module (oriented in the same direction as the surface of touchscreen)).

According to an example of the present disclosure, when displaying the page in response to the user request, the electronic device is capable of activating at least one sensor (e.g., at least one of an infrared sensor, an illuminance sensor, and a camera module). If an input event in which an object enters into a sensing range of the corresponding sensor is detected (e.g., a hand gesture), the electronic device is aware that the user is preparing the writing or drawing action. The electronic device displays the guidance object (e.g., a guide line, a background sketch, or a background image) to assist in the writing or drawing action of the user. In an example of the present disclosure, if a hand gesture (e.g., a hand gesture in which the hand enters within the sensing range of the sensor) is detected by a currently running sensor, the guidance object appears on the page screen. If the hand gesture stops (e.g., the hand moves out of the sensing area of the sensor), the guidance object disappears on the page screen. Specifically, in an example of the present disclosure, the guidance object appears and disappears in real time according to the presence/absence of detection of the hand gesture.

As described above, the gesture-based data processing method and apparatus of the present invention is capable of toggling the visibility of a guidance object according to the user gesture (e.g. hovering gesture and hand gesture).

The gesture-based data processing method and apparatus of the present invention is also capable of showing a guidance object on an editable page of the application of the electronic device in response to a hovering event to assist the user to input data efficiently.

Also, the gesture-based data processing method and apparatus of the present invention is capable of showing a guide in response to a hover-in event in the state that an editable page is displayed on the screen of the electronic device, displaying data input with the assistance of the guide as overlaid thereon, and hiding the guide in response to a hover-out event to display only the input data with the absence of the guide. The gesture-based data processing method and apparatus of the present invention allows the user to make writing, drawing, or document editing input accurately with the assistance of the guide (e.g. guidance object preconfigured in various forms) appearing in response to the hover-in action of a certain input tool (e.g. user's finger and electronic pen). For example, the user may write text along the horizontal line appearing on the page in response to the hover-in event, draw with the assistance of a background sketch appearing in response to the hover-in event, or editing a document with the assistance of indication marks appearing in response to the hover-in event.

The gesture-based data processing method and apparatus of the present invention is further capable of assisting the user to write text as aligned along the horizontal guide lines and drawing a figure with the assistance of guide, resulting in improvement of writing and drawing recognition rate.

The gesture-based data processing method and apparatus of the present invention is also capable of providing various types of background sketches in response to a hovering gesture triggered by a certain input tool (e.g., user's finger and electronic pen), such that the user draws a picture delicately and accurately with the assistance of the background sketch. The background sketch disappears in response to removal of the hovering gesture triggered by the input tool such that only the picture drawn by the user is displayed. Accordingly, the user is capable of checking the drawing progress by removing the hovering gesture whenever necessary while drawing the picture.

Also, the gesture-based data processing method and apparatus of the present disclosure is capable of presenting various drawing tools in the form of figures or picture templates in the hover-in state of the input tool in order to assist the user's input while checking the input result with the hover-out gesture.

Furthermore, the gesture-based data processing method and apparatus of the present invention is capable of assisting the user to make an accurate and delicate input on an editable page of the application executed in the electronic device, resulting in improvement of user convenience and device usability and competitiveness. The gesture-based data processing method and apparatus according to any of the various embodiments of the present invention can be applied to any of all types of electronic devices capable of processing data (e.g. data input and display) as well as portable terminals (such as smartphone, tablet computer, PDA, and digital camera).

In various examples of the present disclosure, the modules may be implemented as any or combination of software, firmware, hardware, and/or any combination thereof. Also, some or all of the modules may be implemented as an entity capable of executing the functions of the individual modules identically.

In various examples of the present disclosure, a plurality of operations may be performed sequentially, repeatedly, or in parallel. Also, some of the operations may be omitted or replaced by other operations.

It will be appreciated that examples of the present disclosure can be realized in the form of hardware, software or a combination of hardware and software. Any such software may be stored in the form of volatile or non-volatile storage. In particular, the above-described example of the present disclosure can be implemented in the form of computer-executable program commands and stored in a computer-readable storage medium. The computer readable storage medium may store the program commands, data files, and data structures in individual or combined forms. The program commands recorded in the storage medium may be designed and implemented for various exemplary embodiments of the present invention or used by those skilled in the computer software field.

The computer-readable storage medium includes magnetic media such as a floppy disk and a magnetic tape, optical media including a Compact Disc (CD) ROM and a Digital Video Disc (DVD) ROM, a magneto-optical media such as a floptical disk, and the hardware device designed for storing and executing program commands such as ROM, RAM, and flash memory. The programs commands include the language code executable by computers using the interpreter as well as the machine language codes created by a compiler. The aforementioned hardware device can be implemented with one or more software modules for executing the operations of the various exemplary embodiments of the present invention. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (e.g. internal machine states) are utilized to achieve a technical effect.

Certain embodiments aim to achieve the technical effect of enhancing the precision of an input device.

Certain embodiments aim to achieve the technical effect of lowering a burden (e.g. a cognitive, operative, operational, operating, or manipulative burden) of a user when performing certain computer or device interactions.

Certain embodiments aim to achieve the technical effect of providing a more efficient man-machine (user-machine) interface.

## Claims

1. A method for data processing in an electronic device, the method comprising:
displaying (701) a page on a screen of the electronic device;
detecting (203, 703) a user hover gesture; in response to the detection of the user hover gesture:
determining if at least one guidance object corresponding to the displayed page exists, and if it is determined that at least one guidance object corresponding to the displayed page does not exist, displaying (711) a guidance object configuration menu, receiving a user input through the guidance object configuration menu for capturing an image using a camera of the electronic device, capturing an image using the camera, and designating the captured image as the guidance object of the displayed page;
displaying (205, 721) the guidance object on the screen of the electronic device;
receiving (207, 723) data input from the user;
displaying (209, 725) the data input from the user with the guidance object on the screen when the data input from the user is received;
combining the data input from the user with the guidance object; and
storing the combined data input from the user and the guidance object.

2. The method of claim 1, wherein detecting the user hover gesture comprises detecting placement of an input tool within a predetermined distance above the screen, wherein the screen comprises a touchscreen (130).

3. The method of claim 1 or claim 2, further comprising:
detecting (211, 727) removal of the user hover gesture while the data input from the user and the guidance object are displayed on the screen; and
removing (213, 729) the guidance object so that only the data input from the user is displayed on the screen in response to detecting the removal of the user hover gesture.

4. The method of claim 3 when dependent on claim 2, wherein the removal of the user hover gesture is detected when the input tool is lifted beyond the predetermined distance from the screen.

5. The method of claim 3 or claim 4, further comprising, when the user hover gesture is detected while only the data input from the user is displayed, displaying the guidance object with the data input from the user.

6. The method of claim 1, wherein if at least one guidance object corresponding to the displayed page exists, the method further comprises:
determining (715) whether the page has a single designated guidance object; and
when the page has a single designated guidance object,
displaying (721) the guidance object; or
when the page has more than one designated guidance object, selecting (719) one of a plurality of guidance objects in response to a user request and displaying (721) the selected one of the plurality of guidance objects.

7. The method of any one of the preceding claims, wherein detecting the user hover gesture comprises determining (705) whether a guide display mode is on;
wherein when the guide display mode is on, detecting the user hover gesture comprises determining to display the guidance object; and
wherein when the guide display mode is off, detecting the user hover gesture comprises performing (707) a predetermined function mapped to the user hover gesture.

8. An apparatus comprising:
a screen arranged to display a page;
a proximity sensor configured to detect a user hover gesture;
a touch sensor configured to receive data input from the user; and
a control unit (180) configured to
determine, in response to the detection of the user hover gesture, if a guidance object corresponding to the displayed page exists, and if it is determined that a guidance object corresponding to the displayed pages does not exist, display a guidance object configuration menu, receive a user input through the guidance object configuration menu for capturing an image using a camera of the apparatus, capture an image using the camera, and designate the captured image as the guidance object of the displayed page,
wherein the screen is arranged to display the data input from the user with the guidance object when the data input from the user is received, and wherein the control unit is configured to combine the data input from the user and the guidance object; and wherein
the apparatus further comprises
a storage unit (150) configured to store the combined data input from the user and the guidance object.

9. The apparatus of claim 8, wherein the control unit (180) is further configured to control the screen to display the guidance object in response to detection of the user hover gesture, and to remove the guidance object from the screen in response to the removal of the user hover gesture.

10. The apparatus of claim 8, wherein the control unit (180) is further configured to control the screen to display the data input from the user with the guidance object while the user hover gesture is maintained, and to control the screen to display the data input from the user without the guidance object when the user hover gesture is not maintained.

11. A non-transitory computer-readable storage medium storing one or more programs, which when executed implement the method of any one of claims 1 to 7.

## Patentansprüche

1. Verfahren zur Datenverarbeitung in einer elektronischen Einheit, wobei das Verfahren aufweist:
ein Anzeigen (701) einer Seite auf einem Bildschirm der elektronischen Einheit;
ein Erkennen (203, 703) einer Benutzer-Schwebegeste;
in Reaktion auf das Erkennen der Benutzer-Schwebegeste:
Bestimmen, ob mindestens ein Führungsobjekt vorhanden ist, das der angezeigten Seite entspricht, und wenn bestimmt wird, dass nicht mindestens ein Führungsobjekt vorhanden ist, das der angezeigten Seite entspricht, ein Anzeigen (711) eines Führungsobjekt-Konfigurationsmenüs, ein Empfangen einer Benutzereingabe über das Führungsobjekt-Konfigurationsmenü zum Erfassen eine Bilds unter Verwendung einer Kamera der elektronischen Einheit, ein Erfassen eines Bilds unter Verwendung der Kamera und ein Angeben des erfassten Bilds als das Führungsobjekt der angezeigten Seite,
ein Anzeigen (205, 721) des Führungsobjekts auf dem Bildschirm der elektronischen Einheit;
ein Empfangen (207, 723) von Daten, die von dem Benutzer eingegeben werden;
ein Anzeigen (209, 725) der von dem Benutzer eingegebenen Daten mit dem Führungsobjekt auf dem Bildschirm, wenn die von dem Benutzer eingegebenen Daten empfangen werden;
ein Kombinieren der von dem Benutzer eingegebenen Daten mit dem Führungsobjekt; und
ein Speichern der kombinierten von dem Benutzer eingegebenen Daten und des Führungsobjekts.

2. Verfahren nach Anspruch 1, wobei das Erkennen der Benutzer-Schwebegeste ein Erkennen einer Positionierung eines Eingabewerkzeugs innerhalb eines vorbestimmten Abstands über dem Bildschirm aufweist, wobei der Bildschirm einen Berührungsbildschirm (130) aufweist.

3. Verfahren nach Anspruch 1 oder Anspruch 2, ferner aufweisend:
ein Erkennen (211, 727) eines Entfernens der Benutzer-Schwebegeste, während die von dem Benutzer eingegebenen Daten und das Führungsobjekt auf dem Bildschirm angezeigt werden; und
ein Entfernen (213, 729) des Führungsobjekts, sodass nur die von dem Benutzer eingegebenen Daten auf dem Bildschirm in Reaktion auf ein Erkennen des Entfernens der Benutzer-Schwebegeste angezeigt werden.

4. Verfahren nach Anspruch 3 bei Abhängigkeit von Anspruch 2, wobei das Entfernen der Benutzer-Schwebegeste erkannt wird, wenn das Eingabewerkzeug über den vorbestimmten Abstand von dem Bildschirm hinaus angehoben wird.

5. Verfahren nach Anspruch 3 oder Anspruch 4, ferner aufweisend, wenn die Benutzer-Schwebegeste erkannt wird, während nur die von dem Benutzer eingegebenen Daten angezeigt werden, ein Anzeigen des Führungsobjekts mit den von dem Benutzer eingegebenen Daten.

6. Verfahren nach Anspruch 1, wobei, wenn mindestens ein Führungsobjekt vorhanden ist, das der angezeigten Seite entspricht, das Verfahren ferner aufweist:
ein Bestimmen (715), ob die Seite ein einzelnes angegebenes Führungsobjekt hat; und
wenn die Seite ein einzelnes angegebenes Führungsobjekt hat, ein Anzeigen (721) des Führungsobjekts; oder
wenn die Seite mehr als ein angegebenes Führungsobjekt hat, ein Auswählen (719) von einem von einer Mehrzahl von Führungsobjekten in Reaktion auf eine Benutzeranforderung und ein Anzeigen (721) des einen ausgewählten aus der Mehrzahl von Führungsobjekten.

7. Verfahren nach einem der vorhergehenden Ansprüche, wobei ein Erkennen der Benutzer-Schwebegeste ein Bestimmen (705) aufweist, ob ein Führungsanzeigemodus eingeschaltet ist;
wobei, wenn der Führungsanzeigemodus eingeschaltet ist, ein Erkennen der Benutzer-Schwebegeste ein Bestimmen zum Anzeigen des Führungsobjekts aufweist; und wobei, wenn der Führungsanzeigemodus ausgeschaltet ist, ein Erkennen der Benutzer-Schwebegeste ein Ausführen (707) einer vorbestimmten Funktion aufweist, die der Benutzer-Schwebegeste zugeordnet ist.

8. Vorrichtung, aufweisend:
einen Bildschirm, der zum Anzeigen einer Seite angeordnet ist;
einen Abstandssensor, der konfiguriert ist, um eine Benutzer-Schwebegeste zu erkennen;
einen Berührungssensor, der konfiguriert ist, um Daten zu empfangen, die von dem Benutzer eingegeben werden; und
eine Steuereinheit (180), die konfiguriert ist, um in Reaktion auf das Erkennen der Benutzer-Schwebegeste zu bestimmen, ob ein Führungsobjekt vorhanden ist, das der angezeigten Seite entspricht, und wenn bestimmt wird, dass kein Führungsobjekt vorhanden ist, das den angezeigten Seiten entspricht, ein Führungsobjekt-Konfigurationsmenü anzuzeigen, eine Benutzereingabe über das Führungsobjekt-Konfigurationsmenü zum Erfassen eines Bilds unter Verwendung einer Kamera der Vorrichtung zu empfangen, ein Bild unter Verwendung der Kamera zu erfassen und das erfasste Bild als das Führungsobjekt der angezeigten Seite anzugeben, wobei der Bildschirm zum Anzeigen der von dem Benutzer eingegebenen Daten mit dem Führungsobjekt angeordnet ist, wenn die von dem Benutzer eingegebenen Daten empfangen werden,
und wobei die Steuereinheit konfiguriert ist, um die von dem Benutzer eingegebenen Daten und das Führungsobjekt zu kombinieren; und wobei
die Vorrichtung ferner eine Speichereinheit (150) aufweist, die konfiguriert ist, um kombinierten von dem Benutzer eingegebenen Daten und das Führungsobjekt zu speichern.

9. Vorrichtung nach Anspruch 8, wobei die Steuereinheit (180) ferner konfiguriert ist, um den Bildschirm zum Anzeigen des Führungsobjekts in Reaktion auf ein Erkennen der Benutzer-Schwebegeste zu steuern und das Führungsobjekt in Reaktion auf das Entfernen der Benutzer-Schwebegeste aus dem Bildschirm zu entfernen.

10. Vorrichtung nach Anspruch 8,
wobei die Steuereinheit (180) ferner konfiguriert ist, um den Bildschirm zum Anzeigen der von dem Benutzer eingegebenen Daten mit dem Führungsobjekt zu steuern, während die Benutzer-Schwebegeste beibehalten wird, und um den Bildschirm zum Anzeigen der von dem Benutzer eingegebenen Daten ohne das Führungsobjekt zu steuern, wenn die Benutzer-Schwebegeste nicht beibehalten wird.

11. Nicht flüchtiges computerlesbares Speichermedium, das ein oder mehrere Programme speichert, die bei Ausführung das Verfahren nach einem der Ansprüche 1 bis 7 umsetzen.

## Revendications

1. Procédé de traitement de données dans un dispositif électronique, le procédé comprenant :
l'affichage (701) d'une page sur un écran du dispositif électronique ;
la détection (203, 703) d'un geste de survol de l'utilisateur ;
en réponse à la détection du geste de survol de l'utilisateur :
la détermination s'il existe au moins un objet de guidage correspondant à la page affichée, et s'il est déterminé qu'il n'existe pas au moins un objet de guidage correspondant à celui affiché, l'affichage (711) d'un menu de configuration d'objet de guidage, la réception d'une entrée d'utilisateur par le biais du menu de configuration d'objet de guidage pour capturer une image en utilisant une caméra du dispositif électronique, la capture d'une image en utilisant la caméra, et la désignation de l'image capturée comme l'objet de guidage de la page affichée,
l'affichage (205, 721) de l'objet de guidage sur l'écran du dispositif électronique ;
la réception (207, 723) d'une entrée de données depuis l'utilisateur ;
l'affichage (209, 725) de l'entrée de données depuis l'utilisateur avec l'objet de guidage sur l'écran quand l'entrée de données depuis l'utilisateur est reçue ;
la combinaison de l'entrée de données depuis l'utilisateur avec l'objet de guidage ; et
le stockage de l'entrée de données depuis l'utilisateur et de l'objet de guidage combinés.

2. Procédé selon la revendication 1, dans lequel la détection du geste de survol de l'utilisateur comprend la détection du placement d'un outil d'entrée à une distance prédéterminée au-dessus de l'écran, dans lequel l'écran comprend un écran tactile (130).

3. Procédé selon la revendication 1 ou 2, comprenant en outre :
la détection (211, 727) du retrait du geste de survol de l'utilisateur tandis que l'entrée de données depuis l'utilisateur et l'objet de guidage sont affichés sur l'écran ; et
le retrait (213, 729) de l'objet de guidage de façon à ce que seule l'entrée de données depuis l'utilisateur soit affichée sur l'écran en réponse à la détection du retrait du geste de survol de l'utilisateur.

4. Procédé selon la revendication 3 lorsqu'elle est dépendante de la revendication 2, dans lequel le retrait du geste de survol de l'utilisateur est détecté quand l'outil d'entrée est levé au-delà de la distance prédéterminé depuis l'écran.

5. Procédé selon la revendication 3 ou 4, comprenant en outre, quand le geste de survol de l'utilisateur est détecté tandis que seule l'entrée de données depuis l'utilisateur est affichée, l'affichage de l'objet de guidage avec l'entrée de données depuis l'utilisateur.

6. Procédé selon la revendication 1, dans lequel si au moins un objet de guidage correspondant à la page affichée existe, le procédé comprend en outre :
la détermination (715) si la page possède un objet de guidage désigné unique ; et
quand la page possède un objet de guidage désigné unique, l'affichage (721) de l'objet de guidage ; ou
quand la page possède plus d'un objet de guidage désigné, la sélection (719) de l'un d'une pluralité d'objets de guidage en réponse à une requête d'utilisateur et l'affichage (721) de celui sélectionné de la pluralité d'objets de guidage.

7. Procédé selon l'une quelconque des revendications précédentes, dans lequel la détection du geste de survol de l'utilisateur comprend la détermination (705) si un mode d'affichage de guidage est activé ;
dans lequel quand le mode d'affichage de guidage est activé, la détection du geste de survol de l'utilisateur comprend la détermination d'afficher l'objet de guidage ; et
dans lequel quand le mode d'affichage de guidage est désactivé, la détection du geste de survol de l'utilisateur comprend l'exécution (707) d'une fonction prédéterminée associée au geste de survol de l'utilisateur.

8. Appareil comprenant :
un écran agencé pour afficher une page ;
un capteur de proximité configuré pour détecter un geste de survol de l'utilisateur ;
un capteur de toucher configuré pour recevoir une entrée de données depuis l'utilisateur ; et
une unité de commande (180) configurée pour déterminer, en réponse à la détection du geste de survol de l'utilisateur, s'il existe un objet de guidage correspondant à la page affichée, et s'il est déterminé qu'il n'existe pas d'objet de guidage correspondant aux pages affichées, afficher un menu de configuration d'objet de guidage, recevoir une entrée d'utilisateur par le biais du menu de configuration d'objet de guidage pour capturer une image en utilisant une caméra de l'appareil, capturer une image en utilisant la caméra, et désigner l'image capturée comme l'objet de guidage de la page affichée,
dans lequel l'écran est agencé pour afficher l'entrée de données depuis l'utilisateur avec l'objet de guidage quand l'entrée de données depuis l'utilisateur est reçue,
et dans lequel l'unité de commande est configurée pour combiner l'entrée de données depuis l'utilisateur et l'objet de guidage ; et dans lequel l'appareil comprend en outre
une unité de stockage (150) configurée pour stocker l'entrée de données depuis l'utilisateur et l'objet de guidage combinés.

9. Appareil selon la revendication 8, dans lequel l'unité de commande (180) est en outre configurée pour commander à l'écran d'afficher l'objet de guidage en réponse à la détection du geste de survol de l'utilisateur, et pour retirer l'objet de guidage de l'écran en réponse au retrait du geste de survol de l'utilisateur.

10. Appareil selon la revendication 8, dans lequel l'unité de commande (180) est en outre configurée pour commander à l'écran d'afficher l'entrée de données depuis l'utilisateur avec l'objet de guidage tandis que le geste de survol de l'utilisateur est maintenu, et pour commander à l'écran d'afficher l'entrée de données depuis l'utilisateur sans l'objet de guidage quand le geste de survol de l'utilisateur n'est pas maintenu.

11. Support de stockage lisible par ordinateur, non transitoire, stockage un ou plusieurs programmes qui, lorsqu'ils sont exécutés, mettent en oeuvre le procédé selon l'une quelconque des revendications 1 à 7.
